# EUROPEAN PATENT APPLICATION

(11) **EP 3 549 815 A1**
(43) Date of publication of application: **09.10.2019**
(21) Application number: 19163467.4
(22) Date of filing: 18.03.2019
(51) Int. Cl.: B60L 53/65, B60L 53/66, B60L 53/67, B60L 58/12

(54) **METHOD FOR ARRANGING A RESERVATION FOR A BATTERY, METHOD FOR ARRANGING A RESERVATION FOR A RECHARGE PORT, POWER MANAGEMENT SYSTEM FOR MANAGING BATTERIES, AND POWER MANAGEMENT SYSTEM FOR MANAGING RECHARGE PORTS**

(30) Priority: 19.03.2018 TW 107109341
(71) Applicant: Kwang Yang Motor Co., Ltd., Kaohsiung City 80794 (TW)
(72) Inventor: TU, Chia-Cheng, 80794 Kaohsiung (TW); TIEN, Chi-Wei, 80794 Kaohsiung (TW); CHEN, Chien-Hung, 80794 Kaohsiung (TW)
(74) Representative: Stöckeler, Ferdinand

(57) **Abstract**

A method for arranging a reservation for a battery in one of a plurality of the battery stations (4), the battery (2) being operable to switch between an idle state and a reserved state. The method includes: receiving an inquiry that includes a location of a user device (5); determining a selected one of battery stations (4) having at least one battery (2) in the idle state and having a shortest distance from the user device (5), and transmitting a response to the user device (5), the response including the selected one of battery stations (4); and controlling one of the at least one battery (2) in the selected one of battery stations (4) that is in the idle state to switch to the reserved state.

## Description

The disclosure relates to a method for arranging a reservation for a battery, a method for arranging a reservation for a recharge port, a power management system for managing batteries, and a power management system for managing recharge ports.

The battery electric vehicle (BEV) has become a popular subject in vehicle development because the BEV replaces internal combustion engines (ICEs) with electric motors and is powered by electric batteries, and therefore reduces (or eliminates altogether) emissions of greenhouse gas (e.g., carbon dioxide). The technologies associated with electric batteries are among the primary focus of those developments.

When the batteries for a BEV are used up, the batteries may be recharged or replaced at a battery station set up by a manufacturer of the BEV. It is noted that as the BEVs become more common, demands for replacement at a same battery station may increase as well.

One object of the disclosure is to provide a method for arranging a reservation for a battery.

According to one embodiment of the disclosure, the method is implemented using a server communicating with a plurality of separately located battery stations . Each of the battery stations has a plurality of batteries . Each of the batteries is operable to switch between an idle state and a reserved state. The method includes:
a) receiving, by the server, an inquiry that includes a geographic location of a user device;
b) in response to receipt of the inquiry, determining, by the server, a selected one of battery stations that has at least one battery in the idle state and that has a shortest distance from the user device;
c) transmitting, by the server, a response to the user device, the response including the selected one of the battery stations; and
d) controlling, by the server, one of the at least one battery at the selected one of the battery stations that is in the idle state to switch to the reserved state.

Another object of the disclosure is to provide a power management system that is capable of performing the method for arranging a reservation for a battery.

According to one embodiment of the disclosure, the power management system includes a server and a plurality of battery stations communicating with the server. Each of the battery stations has a plurality of batteries. Each of the batteries is operable to switch between an idle state and a reserved state.

The server is configured to receive an inquiry that includes a geographic location of a user device, and, in response to receipt of the inquiry, determine a selected one of the battery stations that has at least one battery in the idle state and that has a shortest distance from the user device. Afterward, the server is configured to transmit a response to the user device, the response including the selected one of the battery stations.

The server is further configured to control one of the at least one battery at the selected one of the battery stations that is in the idle state to switch to the reserved state.

Another object of the disclosure is to provide a method for arranging a reservation for a recharge port for a battery.

According to one embodiment of the disclosure, the method is implemented using a server communicating with a plurality of separately located battery stations . Each of the battery stations includes a plurality of recharge ports. Each of the recharge ports is operable to switch between a idle state and a reserved state. The method includes:
A) receiving, by the server, an inquiry that includes a geographic location of a user device;
B) in response to the inquiry, determining, by the server, a selected one of the battery stations that has at least one recharge port in the idle state, and that has a shortest distance from the user device;
C) transmitting, by the server, a response to the user device, the response including the selected one of battery stations; and
D) controlling, by the server, the at least one recharge port at the selected one of battery stations that is in the idle state to switch to the reserved state.

Another object of the disclosure is to provide a power management system that is capable of performing the method for arranging a reservation for a recharge port for a battery.

According to one embodiment of the disclosure, the power management system includes a server and a plurality of battery stations communicating with the server.

Each of the battery stations has a plurality of recharge ports. Each of the recharge ports is operable to switch between a idle state and a reserved state.

The server is configured to receive an inquiry that includes a geographic location of a user device, and in response to receipt of the inquiry, determine a selected one of the battery stations that has at least one recharge ports in the idle state, and that has a shortest distance from the user device. Afterward, the server is configured to transmit a response to the user device, the response including the selected one of the battery stations; and
the server is further configured to control one of the at least one recharge ports at the selected one of the battery stations that is in the idle state to switch to the reserved state.

Other features and advantages of the disclosure will become apparent in the following detailed description of the embodiments with reference to the accompanying drawings, of which:
Figures 1 to 3 illustrate a vehicle according to one embodiment of the disclosure;
Figure 4 is a block diagram illustrating a power management system according to one embodiment of the disclosure;
Figure 5A is a flow chart illustrating steps of a method for arranging a reservation for a battery according to one embodiment of the disclosure;
Figure 5B is a flow chart illustrating steps of a method for arranging a reservation for a recharge port for a battery according to one embodiment of the disclosure;
Figure 5C is a flow chart illustrating steps of a process for enabling a user to retrieve a battery that has been fully recharged according to one embodiment of the disclosure;
Figure 6 is a flow chart illustrating sub-steps of determining a selected one of the battery stations according to one embodiment of the disclosure;
Figure 7 is a flow chart illustrating sub-steps of controlling a battery to switch to a reserved state; and
Figure 8 is a flow chart illustrating sub-steps of determining a selected one of the battery stations according to one embodiment of the disclosure; and
Figure 9 is a flow chart illustrating sub-steps of controlling a recharge port to switch to a reserved state.

Before the disclosure is described in greater detail, it should be noted that where considered appropriate, reference numerals or terminal portions of reference numerals have been repeated among the figures to indicate corresponding or analogous elements, which may optionally have similar characteristics.

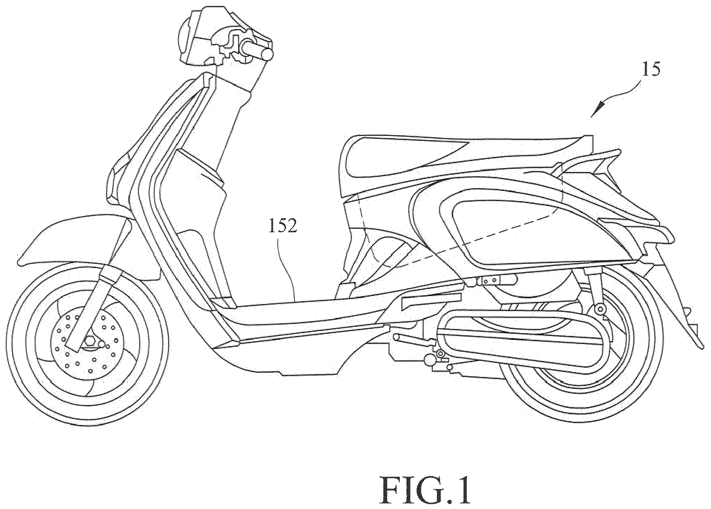

Figures 1 to 3 illustrate a vehicle 15 according to one embodiment of the disclosure. In this embodiment, the vehicle 15 is a battery electric vehicle (BEV). Specifically, the vehicle 15 is an electric motorcycle.

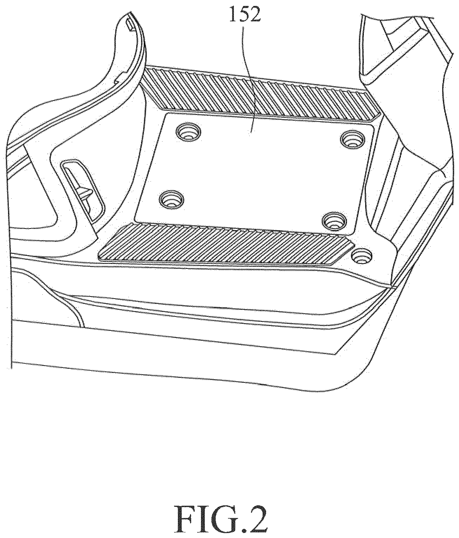

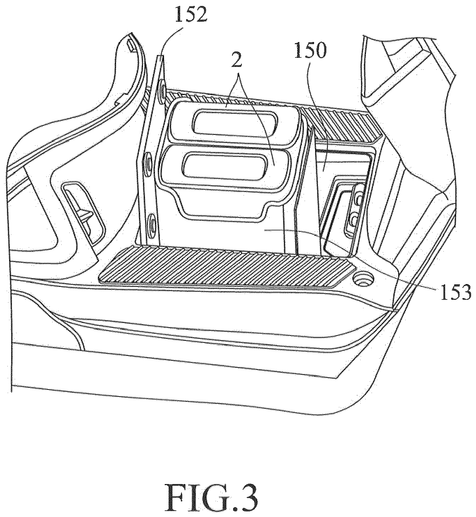

The vehicle 15 includes a floorboard 152, and a battery box 153 located in a receiving space 150 formed below the floorboard 152. In this embodiment, the floorboard 152 is connected to the battery box 153. The battery box 153 may be driven by an actuating mechanism (not depicted in the drawings), for example a motor, to move upwardly or downwardly. When the battery box 153 is received in the receiving space 150, the floorboard 152 may be positioned above the battery box 153, such that the battery box 153 is covered by the floorboard 152 (as shown in Figure 2) . When the battery box 153 is actuated to move upwardly, the floorboard 152 may be pushed aside, such that part of the battery box 153 can be moved out of the receiving space 150 (as shown in Figure 3).

In one embodiment, two batteries 2 may be placed in the battery box 153 for providing power to the vehicle 15. Each of the batteries 2 includes a built-in microprocessor and a physical storage module (not depicted in the drawings). When the battery 2 are in use, the microprocessor is configured to detect a battery status set, to record the battery status set and to store the battery status set in the physical storage module.

The battery status set may include a number of statuses such as a power consumption of battery discharge, a health condition of the battery 2, a remain capacity of the battery 2, a full charge capacity of the battery 2, a voltage of the battery 2, a charge/discharge current of the battery 2, a cycle count of charge state of the battery 2, a charging time of the battery 2, a software serial number of the battery 2, a hardware serial number of the battery 2, etc.

In this embodiment, the batteries 2 may be removable from the battery box 153 for replacement.

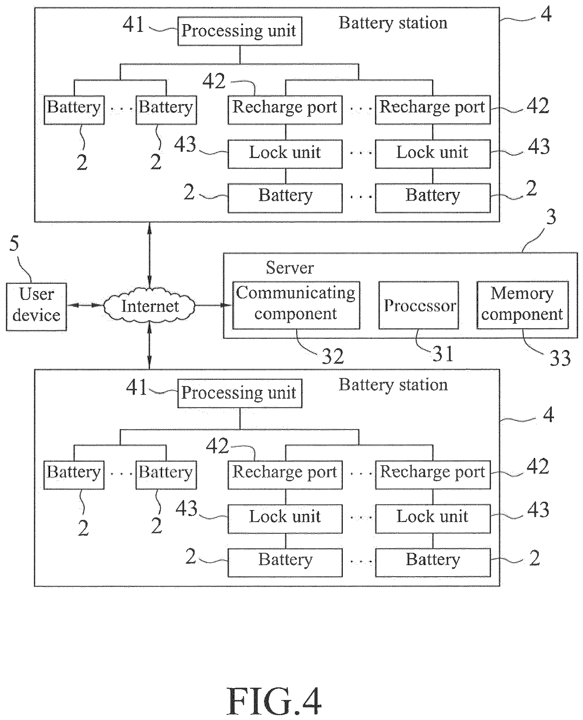

Figure 4 is a block diagram illustrating a power management system according to one embodiment of the disclosure. In this embodiment, the power management system includes a server 3 and a plurality of battery stations 4 (two are shown in Figure 4) that are configured to communicate with the server 3 over a network (e.g., the Internet). The battery stations 4 may be located at separate geographic locations, respectively. The server 3 is capable of communicating with a user device 5 over the network.

In this embodiment, the user device 5 is a portable electronic device such as a smart phone, a tablet, a laptop, etc., and includes a processor, an input interface, a display screen, a communication component, and a positioning component (e.g., a global positioning system (GPS) device).

The server 3 may be maintained by a manufacturer of the batteries 2, and includes a processor 31, a communicating component 32, and a memory component 33.

The processor 31 may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), a radio-frequency integrated circuit (RFIC), etc.

The communicating component 32 may include a short-range wireless communicating module supporting a short-range wireless communication network using a wireless technology of Bluetooth® and/or Wi-Fi, etc., and a mobile communicating module supporting telecommunication using Long-Term Evolution (LTE), the third generation (3G) and/or fourth generation (4G) of wireless mobile telecommunications technology, and/or the like.

The memory component 33 may be embodied using one or more of a hard disk, a solid-state drive (SSD) and other non-transitory storage medium, and stores a plurality of user information sets, information regarding the batteries 2 and information regarding the battery stations 4.

Specifically, the memory component 33 of the server 3 stores the information regarding the batteries 2 that have been manufactured, including the batteries 2 that are in circulation (i.e., that are sold or rented out to customers) and that are disposed at the battery stations 4.

For each of the batteries 2, the information regarding the battery 2 includes an identifier number (hereinafter also referred to as "battery identifier number"), a retrieval code, and power information that may be associated with one or more of the statuses included in the battery status set. The battery identifier number is assigned to the battery 2 upon being manufactured, and may also be stored in the physical storage module (e.g., a built-in memory module) of the battery 2 and/or represented using a two-dimensional barcode (e.g., a quick response (QR) code).

Moreover, the memory component 33 of the server 3 stores information regarding the battery stations 4. Specifically, the memory component 33 stores a plurality of station codes that correspond respectively with the battery stations 4. Each of the station codes includes geographical location information of the corresponding one of the battery stations 4. Specifically, the station code indicates a geographical location of the battery station 4.

Each of the battery stations 4 includes a processing unit 41, a plurality of recharge ports 42 communicating with the processing unit 41, and a plurality of lock units 43 corresponding with the recharge ports 42, respectively.

The processing unit 41 may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), a radio-frequency integrated circuit (RFIC), etc.

Each of the recharge ports 42 is configured to receive a battery 2 so as to recharge the battery 2.

Each of the user information sets includes a user identification number that is to be associated with one or more battery identifier numbers, and is associated with a target (e.g., a telephone number, a user account associated with an application provided by the manufacturer, an email address, etc.).

It is noted that when a user purchases the vehicle 15 at a retail location (which may be one of the battery stations 4 or a retail shop), a setup procedure for the batteries 2 accompanying the vehicle 15 is implemented. In the setup procedure, the user may operate the user device 5 to execute the application provided by the manufacturer of the vehicle 15 so as to communicate with the server 3, and to enter relevant information that may include personal information of the user, a contract type of leasing the batteries 2, and the retrieval code. In response of receipt of the information inputted by the user, the server 3 generates a two-dimensional barcode that includes the user identification number, and transmits the two-dimensional barcode to the user device 5.

The user then operates the user device 5 to display the two-dimensional barcode on a screen thereof, to be scanned by a scanning device located at the retail location. The processing unit 41 obtains the user identification number included in the two-dimensional barcode, and communicates with the server 3 to obtain the retrieval code entered by the user. The retrieval code is subsequently stored in each of the batteries 2 accompanying the vehicle 15 by establishing a near field communication (NFC) with the batteries 2 and writing the retrieval code into the batteries 2 through the NFC. As such, the batteries 2 are tied to the user.

It is noted that in this embodiment, the batteries 2 are leased to the user instead of being directly sold to the user. Two exemplary lease contracts (namely, short-term lease and long-term lease) may be chosen. For the short-term lease contract, when the batteries 2 are used up, the user is instructed to bring the batteries 2 to one of the battery stations 4 for replacement (that is, to replace the used-up batteries 2 with fully-charged batteries 2 that are disposed at the battery station) . For the long-term lease contract, when the batteries 2 are used up, the user is instructed to bring the batteries 2 to one of the battery stations 4 for recharge. It is noted that when the batteries 2 are replaced, the setup procedure may be performed again so as to "tie" the batteries 2 that are used for replacing the used-up batteries 2.

In one embodiment, the type of lease contract is incorporated into the battery identifier number. For example, a battery identifier number associated with a battery 2 that is in a long-term lease contract may be in the form of "3150AAGD7981131001" with the ninth rightmost digit (i.e., 9) indicating that the battery 2 is in the long-term lease contract. For example, a battery identifier number associated with a battery 2 that is in a short-term lease contract may be in the form of "3150AAGD7881131001" with the ninth rightmost digit (i.e., 8) indicating that the battery 2 is in the short-term lease contract. In another embodiment, the type of lease contract may be represented by a separate number that is also incorporated into the battery identifier number.

In this embodiment, each of the battery stations 4 may provide at least one battery 2 that is fully charged for replacing a used-up battery, and that is connected to the processing unit 41 via a connecting port (which may be a recharge port 42 or other types of ports). Furthermore, the processing unit 41 is capable of switching any battery 2 that is connected thereto between an idle state and a reserved state.

Additionally, the processing unit 41 is capable of switching the recharge ports 42 connected thereto individually between a idle state and a reserved state. When a recharge port 42 in the reserved state is connected to a battery 2, the recharge port 42 outputs an electrical current to the battery 2 so as to charge the battery 2. When a recharge port 42 in the idle state is connected to a battery 2, the recharge port 42 is not controlled to output the electrical current to the battery 2.

Each of the lock units 43 is configured to switch between a lock state and an unlocked state. Specifically, when a battery 2 is connected to one of the recharge ports 42, the corresponding one of the lock units 43 may be switched to the lock state so as to secure the battery 2 to the one of the recharge ports 42. When the corresponding one of the lock units 43 is in the locked state, the one of the recharge ports 42 may be controlled to output the electrical current to the battery 2 so as to charge the battery 2. When the corresponding one of the lock units 43 is in the unlocked state, the one of the recharge ports 42 does not output the electrical current to the battery 2.

It is noted that in one embodiment, each of the recharge ports 42 is formed with a receiving hole having a shape corresponding with the shape of the battery 2. When the battery 2 is put in the receiving hole of a recharge port 42, and the corresponding one of the lock units 43 is switched to the locked state, the recharge port 42 outputs the electrical current to the battery 2.

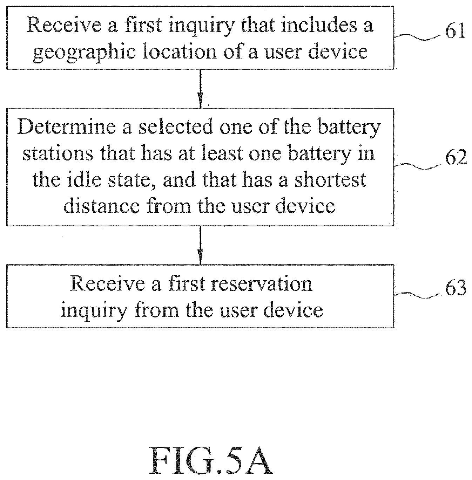

Figure 5A is a flow chart illustrating steps of a method for arranging a reservation for a battery according to one embodiment of the disclosure. The method is implemented using the power management system of Figure 4. For the sake of description, in this embodiment, one battery is to be reserved.

In step 61, the server 3 receives from the user device 5 a first inquiry that includes a geographic location of the user device 5.

In use, when a user of the user device 5 intends to search for a battery station 4 in order to replace a battery 2 which is in a short-term lease contract, he/she may operate the user device 5 to execute a software application (e.g., the application provided by the manufacturer of the vehicle 15) to send the first inquiry to the server 3 over the Internet. In response to execution of the software application, the processor of the user device 5 obtains the geographic location of the user device 5 from the positioning component, and transmits the first inquiry that includes the geographic location of the user device 5, indicating that the user intends to search for a battery station 4 having a battery 2 that is ready for replacement. The first inquiry may further include the user identification code associated with the user of the user device 5.

In response to the first inquiry, in step 62, the server 3 determines a selected one of the battery stations 4 that has at least one battery 2 in the idle state, and that has a shortest distance from the user device 5 based on the current geographic location of the user device 5 and the geographical location information corresponding to the battery stations 4. Then, the server 3 transmits a first response to the user device 5, where the first response includes the selected one of the battery stations 4.

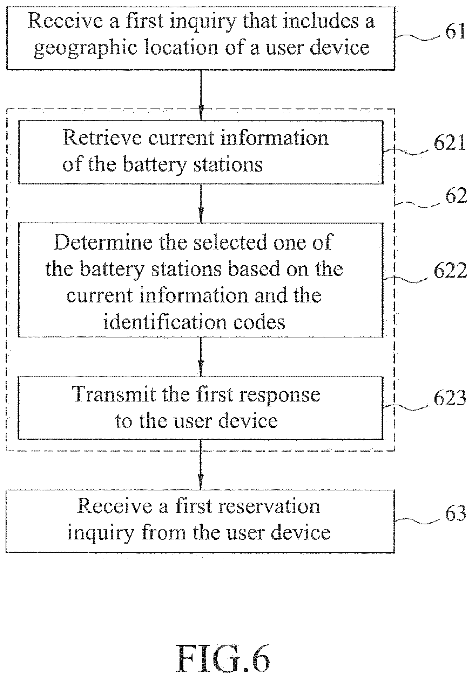

Specifically, the operations of step 62 may be implemented by the sub-steps illustrated in Figure 6.

In sub-step 621, the server 3 retrieves current information of the battery stations 4. Specifically, the current information includes, for each of the battery stations 4, at least a number of batteries 2 that are currently in the idle state. That is to say, from each of the battery stations 4, the server 3 retrieves the identification code corresponding with the battery station 4 and the number of batteries 2 that are in the idle state at the battery station 4.

In sub-step 622, the server 3 determines the selected one of the battery stations 4 based on the current information and the identification codes. Specifically, the server 3 disregards any battery station 4 that has zero (no) battery 2 in the idle state. Then, for each of the battery stations 4 that has at least one battery 2 in the idle state, the server 3 calculates a distance between the battery station 4 and the user device 5 based on the current geographic location of the user device 5 and the geographical location information corresponding to the battery station 4. Subsequently, the server 3 selects one of the battery stations 4 with a shortest distance from the user device 5 as the selected one of the battery stations 4.

In sub-step 623, the server 3 transmits the first response to the user device 5.

After transmitting the first response, in step 63, the server 3 receives a first reservation inquiry from the user device 5.

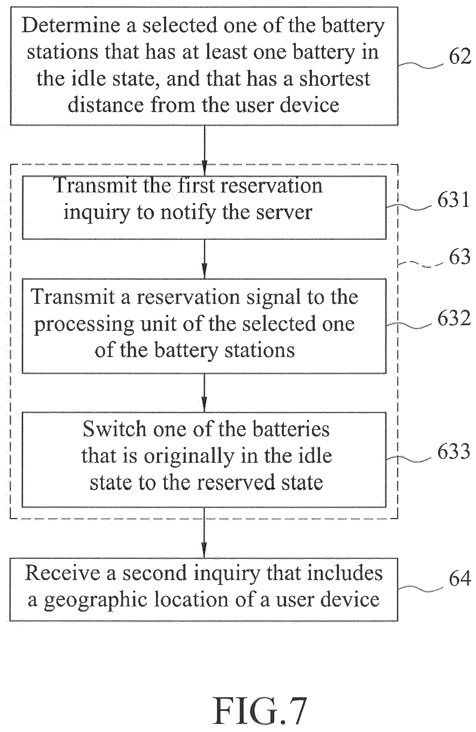

Specifically, the operations of step 63 may be implemented by the sub-steps illustrated in Figure 7.

In use, when the user of the user device 5 is notified of the selected one of the battery stations 4, he/she may choose to reserve the battery 2 that is in the idle state and located at the selected one of the battery stations 4. In such a case, in sub-step 631, the user may operate the user device 5 to transmit the first reservation inquiry to notify the server 3 that the user intends to reserve a battery 2 at the selected one of the battery stations 4.

In response to receipt of the first reservation inquiry, in sub-step 632, the server 3 transmits a reservation signal to the processing unit 41 of the selected one of the battery stations 4.

In response to receipt of the reservation signal, in sub-step 633, the processing unit 41 of the selected one of the battery stations 4 switches one of the batteries 2 that is originally in the idle state to the reserved state. In this embodiment, each of the battery stations 4 further includes a plurality of indication lights corresponding respectively with the batteries 2 that are disposed at the battery station 4. When one of the batteries 2 is switched to the reserved state, the corresponding one of the indication lights is also switched on to provide a visual cue to the user. As such, the user may proceed to the selected one of the battery stations 4 and obtain the one of the batteries 2 in the reserved state for replacement.

After the battery 2 is successively reserved, the user may proceed to travel to the selected one of the battery stations 4. At the selected one of the battery stations 4, the user may operate the user device 5 to execute the software supplication, and to capture a barcode (e.g., a quick response code) that is located at the selected one of the battery stations 4 and that includes the station code of the selected one of the battery stations 4. Afterward, the station code is transmitted by the user device 5, along with the user identification code, to the server 3.

In response, when it is determined by the server 3 based on the user identification code, that the user has reserved a battery 2 at the selected one of the battery stations 4, the server 3 transmits a confirmation signal to the processing unit 41 indicating that the user may retrieve the battery 2 that is in the reserved state.

In another embodiment, after the battery 2 is successively reserved, the user may proceed to travel to the selected one of the battery stations 4. At the selected one of the battery stations 4, the user may operate the user device 5 to execute the software application, and to display a barcode (e.g., a quick response code) that includes the user identification code of the user. The barcode is then captured by an image capturing device located in the selected one of the battery stations 4, and the processing unit 41 obtains the user identification code of the user. Afterward, the user identification code is transmitted by the processing unit 41 to the server 3. When it is determined by the server 3, based on the user identification code, that the user has reserved a battery 2 at the selected one of the battery stations 4, the server 3 transmits a confirmation signal to the processing unit 41 indicating that the user may retrieve the battery 2 that is in the reserved state.

It is noted that in other embodiments, the operations of steps 61 to 63 may be done in various fashions. For example, in one embodiment, the user may directly go visit one of the battery stations 4 (referred to as a visited one of the battery stations 4). At the visited one of the battery stations 4, the user may operate the user device 5 to execute the software application to capture a barcode (e.g., a quick response code) that is located at the visited one of the battery stations 4 and that includes the station code of the visited one of the battery stations 4. Afterward, the station code is transmitted by the user device 5 along with the first inquiry to the server 3.

In response to receipt of the first inquiry, the server 3 determines whether the visited one of the battery stations 4 has a battery 2 that is in the idle state. When it is determined that the visited one of the battery stations 4 has a battery 2 that is in the idle state, the server 3 transmits the first response to the user device 5 indicating that the visited one of the battery stations 4 now serves as the selected one of the battery stations 4 (i.e., the first response includes the visited one of the battery stations as the selected one of the battery stations).

Then, the server 3 transmits the reservation signal to the processing unit 41 of the selected one of the battery stations 4, and in turn, the processing unit 41 of the selected one of the battery stations 4 switches one of the batteries 2 in the idle state to the reserved state.

In another embodiment, the user may directly go visit the visited one of the battery stations 4. At the visited one of the battery stations 4, the user may operate the user device 5 to execute the software application to display a barcode (e.g., a quick response code) that includes the user identification code of the user. The barcode is then captured by an image capturing device located at the visited one of the battery stations 4, and the processing unit 41 obtains the user identification code of the user.

Afterward, the user identification code is transmitted by the user device 5 along with the first inquiry to the server 3.

In response to receipt of the first inquiry, the server 3 determines whether the visited one of the battery stations 4 has a battery 2 that is in the idle state. When it is determined that the visited one of the battery stations 4 has a battery 2 that is in the idle state, the server 3 transmits the first response to the user device 5 indicating that the visited one of the battery stations 4 now serves as the selected one of the battery stations 4.

Then, the server 3 transmits the reservation signal to the processing unit 41 of the selected one of the battery stations 4, and in turn, the processing unit 41 of the selected one of the battery stations 4 switches one of the batteries 2 in the idle state to the reserved state.

It is noted that in this embodiment, when personnel in the visited one of the battery stations 4 determines that the visited one of the battery stations 4 has at least one battery 2 that is in the idle state, the operations of transmitting the first inquiry may be omitted. That is to say, the personnel in the visited one of the battery stations 4 may directly control the processing unit 41 to switch the at least one battery 2 to the reserved state for the user.

In one embodiment, the processing unit 41 of the visited one of the battery stations 4 is configured to obtain the user identification number and to transmit the user identification number to the server 3. The user identification number is included in the barcode displayed on the user device 5.

The processing unit 41 of the visited one of the battery stations 4 is further configured to transmit the user identification number and the station code corresponding with the visited one of the battery stations 4 to the server 3.

The server 3 is configured to verify the user identification number. The verification may be done using, for example, a software application installed in the server and executed by the server 3.

When the user identification number is successively verified, the server 3 controls at least one battery 2 located at the visited one of the battery stations 4 to switch to a state that is ready for retrieval (e.g., the reserved state).

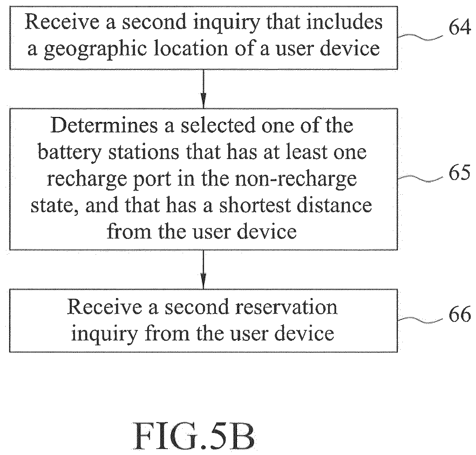

Figure 5B is a flow chart illustrating steps of a method for arranging a reservation for a recharge port 42 for a battery 2 according to one embodiment of the disclosure. In this embodiment, the method is implemented by the power management system of Figure 4. For the sake of description, in this embodiment, one battery is to be recharged.

In step 64, the server 3 receives a second inquiry that includes a geographic location of a user device 5.

In use, when the user of the user device 5 intends to search for a battery station 4 in order to recharge a battery 2 which is in a long-term lease contract, he/she may operate the user device 5 to execute the software application to send the second inquiry to the server 3 over the Internet. In response, the processor of the user device 5 obtains the geographic location of the user device 5 from the positioning component, and transmits the second inquiry that includes the geographic location of the user device 5 to the server 3, indicating that the user intends to search for a battery station 4 having a recharge port 42 that is ready for charging a battery 2 (that is in the idle state) . The second inquiry may further include the user identification code associated with the user of the user device 5.

In response to the second inquiry, in step 65, the server 3 determines a selected one of the battery stations 4 that has at least one recharge port 42 in the idle state, and that has a shortest distance from the user device 5. Then, the server 3 transmits a second response to the user device 5, wherein the second response includes the selected one of the battery stations 4.

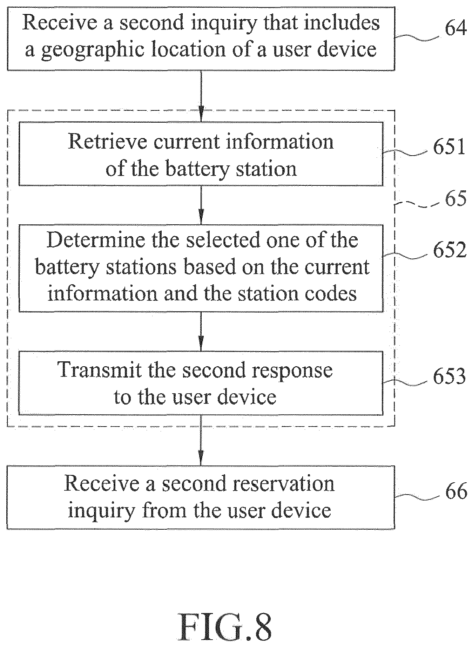

Specifically, the operations of step 65 may be implemented by the sub-steps illustrated in Figure 8.

In sub-step 651, the server 3 retrieves current information of the battery stations 4. Specifically, the current information includes, for each of the battery stations 4, at least a number of recharge ports 42 that are in the idle state. That is to say, from each of the battery stations 4, the server 3 retrieves the station code corresponding with the battery station 4 and the number of recharge ports 42 that are in the idle state at the battery station 4.

In sub-step 652, the server 3 determines the selected one of the battery stations 4 based on the current information and the station codes. Specifically, the server 3 leaves out those battery stations 4 without any recharge port 42 in the idle state. Then, for each of the battery stations 4 that has at least one recharge port 42 in the idle state, the server 3 calculates a distance between the battery station 4 and the user device 5 based on the current geographic location of the user device 5 and the geographical location information corresponding to the battery station 4. Subsequently, the server 3 selects one of the battery stations 4 with a shortest distance from the user device 5 as the selected one of battery stations 4.

In sub-step 653, the server 3 transmits the second response to the user device 5.

After transmitting the second response, in step 66, the server 3 receives a second reservation inquiry from the user device 5.

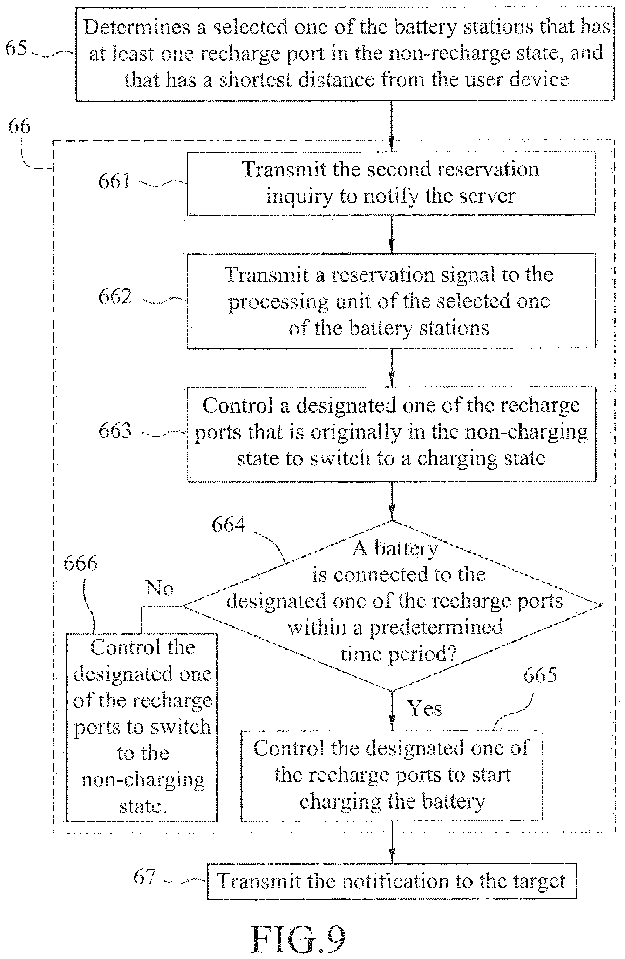

Specifically, the operations of step 66 may be implemented by the sub-steps illustrated in Figure 9.

In use, when the user of the user device 5 is notified of the selected one of the battery stations 4, he/she may choose to reserve the recharge port 42 that is in the idle state and located at the selected one of the battery stations 4. In such a case, in sub-step 661, the user may operate the user device 5 to transmit the second reservation inquiry to notify the server 3 that the user intends to reserve a recharge port 42 at the selected one of the battery stations 4.

In response to receipt of the second reservation inquiry, in sub-step 662, the server 3 transmits a reservation signal to the processing unit 41 of the selected one of the battery stations 4.

In response to receipt of the reservation signal, in sub-step 663, the processing unit 41 of the selected one of the battery stations 4 controls a designated one of the recharge ports 42 that is originally in the idle state to switch to a reserved state. In this embodiment, each of the battery stations 4 further includes a plurality of indication lights corresponding respectively with the recharge ports 42 that are disposed at the battery station 4. When the designated one of the recharge ports 42 is switched to the reserved state, the corresponding one of the indication lights is also switched on to provide a visual cue to the user. As such, the user may then use the designated one of the recharge ports 42 that is switched to the reserved state for charging a battery.

After sub-step 663, the designated one of the recharge ports 42 is successively reserved, and the user may proceed to the selected one of the battery stations 4. At the selected one of the battery stations 4, the user may connect the battery 2 that needs to be recharged to the designated one of the recharge ports 42 in order to charge the battery 2.

Also, after sub-step 663, the processing unit 41 of the selected one of the battery stations 4 starts to count a time period, and to detect, in step 664, whether a battery 2 is connected to the designated one of the recharge ports 42 within a predetermined time period.

When it is determined that a battery 2 is connected to the designated one of the recharge ports 42 within the predetermined time period (e.g., 30 minutes), in step 665, the processing unit 41 controls the lock unit 43 corresponding with the designated one of the recharge ports 42 to switch to the locked state (i.e., to secure the battery 2), and controls the designated one of the recharge ports 42 to start charging the battery 2. As such, the designated one of the recharge ports 42 starts outputting the electrical current to the battery 2.

On the other hand, when it is determined that a battery 2 is not connected to the designated one of the recharge ports 42 after the predetermined time period has elapsed, in step 666, the processing unit 41 controls the designated one of the recharge ports 42 to switch to the idle state. Simultaneously, the corresponding one of the indication lights is also switched off.

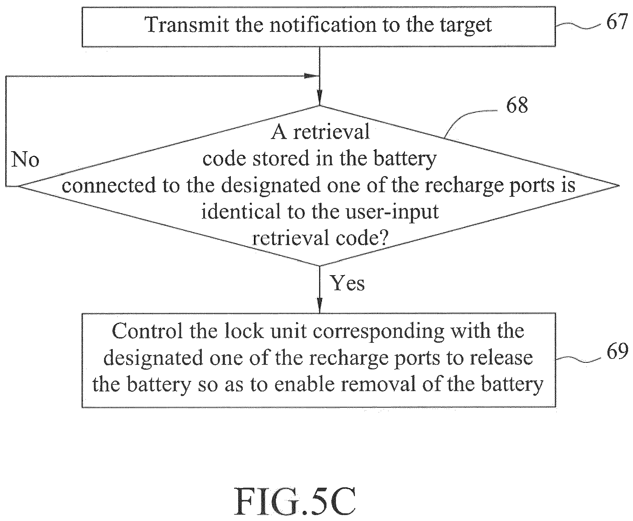

Figure 5C is a flow chart illustrating steps of a process for enabling a user to retrieve a battery that has been fully recharged according to one embodiment of the disclosure.

After it is determined that the battery 2 connected to the designated one of the recharge ports 42 is fully charged, the processing unit 41 may transmit a notification to the server 3, and in step 67, the server 3 transmits the notification to the target . For example, the notification may be in the form of a SMS message transmitted to the user device 5, which is associated with a telephone number registered to the application and serves as the target.

In response to the notification, the user is instructed to input a user-input retrieval code via the user device 5, and the user device 5 transmits the user-input retrieval code to the processing unit 41 of the selected one of the battery stations 4 and/or the server 3.

In response to receipt of the user-input retrieval code, in step 68, the processing unit 41 of the selected one of the battery stations 4 determines whether a retrieval code stored in the battery 2 connected to the designated one of the recharge ports 42 is identical to the user-input retrieval code.

When the determination is affirmative (i.e., when it is determined that the retrieval code stored in the battery 2 connected to the designated one of the recharge ports 42 is identical to the user-input retrieval code), in step 69, the processing unit 41 controls the lock unit 43 corresponding with the designated one of the recharge ports 42 to release the battery 2 so as to enable removal of the battery 2. Otherwise, the

It is noted that, in other embodiments, the operations of steps 68 and 69 may be implemented in other manners.

For example, in one embodiment, the user-input retrieval code is transmitted to the server 3, and when it is determined by the server 3 that the user-input retrieval code is correct, the server 3 controls the lock unit 43 corresponding with the designated one of the recharge ports 42 to switch to the unlocked state (i.e., to release the battery 2) so as to enable removal of the battery 2.

In one embodiment, each of the batteries 2 stores therein a retrieval code, and the server 3 stores a plurality of retrieval codes corresponding respectively with the batteries 2. After a battery 2 is connected to the designated one of the recharge ports 42, the processing unit 41 may first obtain the battery identifier number from the battery 2, and then transmit the battery identifier number to the server 3.

When it is determined that the battery 2 connected to the designated one of the recharge ports 42 is fully charged, the server 3 transmits a notification to the target.

In response to receipt of the user-input retrieval code intended for the battery 2 connected to the designated one of the recharge ports 42, the processing unit 41 of the selected one of the battery stations 4 determines whether a retrieval code stored in the battery 2 connected to the designated one of the recharge ports 42 is identical to the user-input retrieval code, and transmits the user-input retrieval code to the server 3.

When it is determined that one of the retrieval codes stored in the server 3 associated with the battery 2 that is connected to the designated one of the recharge ports 42 (the server 3 identifies the battery 2 connected to the designated one of the recharge ports 42 based on the battery identifier number) is identical to the user-input retrieval code, the server 3 controls the lock unit 43 corresponding with the designated one of the recharge ports 42 to release the battery 2 so as to enable removal of the battery 2.

In another embodiment, the retrieval code is stored in the user device 5, and may be displayed by the user device 5 in the form of a barcode (e.g., a quick response code). When the barcode is captured by the image capturing device located at the visited one of the battery stations 4, the processing unit 41 of the visited one of the battery stations 4 obtains the retrieval code. The retrieval code may be verified by the processing unit 41 and/or the server 3.

In this embodiment, the lock units 43 are embodied using electronic locking mechanisms, and can be controlled by the processing unit 41 and/or the server 3 to switch between the locked state and the unlocked state.

In some embodiments, the lock units 43 are embodied using physical locking mechanisms, and switching between the locked state and the unlocked state may be done by the personnel in the corresponding battery station 4.

In one embodiment, the server 3 stores a plurality of battery identifier numbers corresponding respectively with the batteries 2, and a plurality of user identification numbers that are each associated with one or more of the battery identifier numbers.

During recharge of the battery 2, the processing unit 41 of the selected one of the battery stations 4 periodically obtains a battery status set of the battery 2 that is being charged, and transmits the battery status set to the server 3. The battery status set may include a remain capacity of the battery 2, and an estimated time for the battery 2 to be fully charged.

The server 3 in turn transmits the battery status set to the target according to the user identification number that is associated with the battery identifier number of the battery 2 that is being charged.

In one embodiment, the server 3 is configured to transmit a retrieval code corresponding with the batteries 2 connected to the designated one of the recharge ports 42.

The server 3 is configured to transmit a notification to the target when it is determined that the battery 2 connected to the designated one of the recharge ports 42 is fully charged.

One of the server 3 and the processing unit 41 is configured to, in response to receipt of a user-input retrieval code intended for the battery 2 connected to the designated one of the recharge ports 42, determine whether the user-input retrieval code is correct.

The one of the server 3 and the processing unit 41 is configured to, when it is determined that the user-input retrieval code is correct, control the lock unit 43 corresponding with the designated one of the recharge ports 42 to release the battery 2 so as to enable removal of the battery 2.

In one embodiment, the processing unit 41 of the visited one of the battery stations 4 is configured to obtain a user identification number and to transmit the user identification number to the server 3, wherein the user identification number is included in a barcode displayed on the user device 5.

The processing unit 41 of the visited one of the battery stations 4 is further configured to transmit the user identification number and the station code corresponding with the visited one of the battery stations 4 to the server 3.

The server 3 is configured to verify the user identification number, and when the user identification number is successively verified, to control at least one recharge port 42 located at the visited one of the battery stations 4 to switch to the reserved state. It is noted that the verification of the user identification number may be done using a software application installed in and executed by the server 3.

To sum up, the embodiments of the disclosure provide a method for arranging a reservation for a battery and a method for arranging a reservation for a recharge port. The methods are configured to determine a selected one of the battery stations that is closest to the user device 5, and that has a battery in the idle state or a recharge port in the idle state. After the user confirms a reservation, the battery in the idle state or the recharge port in the idle state may be reserved for the user, and the user may then proceed to the selected one of the battery stations so as to obtain the replacement battery or to use the recharge port. In this manner, the user does not have to wait in a queue in order to obtain the replacement battery or to use the recharge port. When the user fails to show up at the selected one of the battery stations after a predetermined time period has elapsed, the reserved battery or the reserved recharge port may be made available for other users.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for arranging a reservation for a battery, the method to be implemented using a server (3) communicating with a plurality of separately located battery stations (4), each of the battery stations (4) having a plurality of batteries (2), each of the batteries (2) being operable to switch between an idle state and a reserved state, the method being **characterized by**:
a) receiving, by the server (3), an inquiry that includes a geographic location of a user device (5);
b) in response to receipt of the inquiry, determining, by the server (3), a selected one of battery stations (4) that has at least one battery (2) in the idle state and that has a shortest distance from the user device (5);
c) transmitting, by the server (3), a response to the user device (5), the response including the selected one of the battery stations (4); and
d) controlling, by the server (3), one of the at least one battery (2) at the selected one of the battery stations (4) that is in the idle state to switch to the reserved state.

2. The method of Claim 1, the server (3) storing a plurality of station codes that correspond respectively with the battery stations (4), each of the station codes including geographical location information of the corresponding one of the battery stations (4), **characterized in that** step c) includes:
c0) retrieving, by the server (3), current information of the battery stations (4), the current information including, for each of the battery stations (4), at least a number of batteries (2) that are in the idle state;
c1) determining, by the server (3), the selected one of battery stations (4) based on the current information and the station codes; and
c2) transmitting, by the server (3), the response including the selected one of battery stations (4) to the user device (5).

3. The method of Claim 1 or 2, each of the battery stations (4) including a processing unit (41) that is connected to each of the batteries (2) at the battery station (4) for switching the batteries (2) between the idle state and the reserved state, the method to be implemented further using the battery stations (4) and **characterized in that** step d) includes:
d1) receiving, by the server (3), a reservation inquiry from the user device (5);
d2) transmitting, by the server (3), a reservation signal to the processing unit (41) of the selected one of the battery stations (4); and
d3) in response to receipt of the reservation signal, switching, by the processing unit (41) of the selected one of the battery stations (4), one of the batteries (2) at the selected one of the battery stations (4) in the idle state to the reserved state.

4. The method of Claim 3, further **characterized by**:
obtaining, by the processing unit (41) of a visited one of the battery stations (4), a user identification number that is in a form of a two-dimensional barcode displayed on the user device (5);
transmitting, by the processing unit (41) of the visited one of the battery stations (4), the user identification number to the server (3);
determining, by the server (3), whether the visited one of the battery stations (4) has at least one battery (2) that is in the idle state;
when it is determined that the visited one of the battery stations (4) has at least one battery (2) in the idle state, transmitting, by the server (3) to the user device (5), the response that includes the visited one of the battery stations (4) as the selected one of the battery stations (4); and
step c) including controlling, by the server (3), one of the at least one battery (2) at the selected one of the battery stations (4) that is in the idle state to switch to the reserved state after transmitting the response.

5. A power management system **characterized by**:
a server (3); and
a plurality of battery stations (4) communicating with said server (3), each of said battery stations (4) having a plurality of batteries (2), each of the batteries (2) being operable to switch between an idle state and a reserved state,
wherein said server (3) is configured to receive an inquiry that includes a geographic location of a user device (5);
said server (3) is configured to, in response to receipt of the inquiry, determine a selected one of said battery stations (4) that has at least one battery (2) in the idle state and that has a shortest distance from the user device (5), and transmit a response to the user device (5), the response including the selected one of said battery stations (4); and
said server (3) is further configured to control one of the at least one battery (2) at the selected one of said battery stations (4) that is in the idle state to switch to the reserved state.

6. The power management system of Claim 5, **characterized in that**:
said server (3) stores a plurality of station codes that correspond respectively with the battery stations (4), each of the station codes including geographical location information of the corresponding one of the battery stations (4);
said server (3) is configured to
retrieve current information of the battery stations (4), the current information including, for each of the battery stations (4), at least a number of batteries (2) that are in the idle state,
determine the selected one of battery stations (4) based on the current information and the station codes,
transmit the first response including the selected one of battery stations (4) to the user device (5),
receive a first reservation inquiry from the user device (5), and
transmit a reservation signal to the processing unit (41) of the selected one of battery stations (4);
said processing unit (41) of the selected one of battery stations (4) is configured to switch one of the batteries (2) in the idle state to the reserved state in response to receipt of the reservation signal.

7. The power management system of Claim 5, **characterized in that**:
said processing unit (41) of a visited one of said battery stations (4) is configured to obtain a user identification number and to transmit the user identification number to said server (3), wherein the user identification number is included in a two-dimensional barcode displayed on a user device (5) ;
said processing unit (41) of the visited one of said battery stations (4) is further configured to transmit the user identification number and an identification codes corresponding with the visited one of said battery stations (4) to said server (3); and
said server (3) is configured to verify the user identification number, and when the user identification number is successively verified, to control at least one battery (2) located at the visited one of said battery stations (4) to switch to a state that is ready for retrieval.

8. A method for arranging a reservation for a recharge port (42) for a battery (2), the method to be implemented using a server (3) communicating with a plurality of separately located battery stations (4), each of the battery stations (4) including a plurality of recharge ports (42), each of the recharge ports (42) being operable to switch between a idle state and a reserved state, the method being **characterized by**:
A) receiving, by the server (3), an inquiry that includes a geographic location of a user device (5);
B) in response to the inquiry, determining, by the server (3), a selected one of the battery stations (4) that has at least one recharge port (42) in the idle state, and that has a shortest distance from the user device (5);
C) transmitting, by the server (3), a response to the user device (5), the response including the selected one of battery stations (4); and
D) controlling, by the server (3), the at least one recharge port (42) at the selected one of battery stations (4) that is in the idle state to switch to the reserved state.

9. The method of Claim 8, the server (3) storing a plurality of station codes that correspond respectively with the battery stations (4), each of the station codes including geographical location information of the corresponding one of the battery stations (4), **characterized in that** step C) includes:
C0) retrieving, by the server (3), current information of the battery stations (4), the current information including, for each of the battery stations (4), at least a number of recharge port(s) (42) that is/are in the idle state;
C1) determining, by the server (3), the selected one of battery stations (4) based on the current information and the station codes; and
C2) transmitting, by the server (3) to the user device (5), the response including the selected one of battery stations (4).

10. The method of Claim 8 or 9, each of the battery stations (4) including a processing unit (41) that is connected to each of the recharge ports (42) at the battery station (4) for switching the recharge port (42) between the idle state and the reserved state, **characterized in that** step D) includes:
D1) receiving, by the server (3), a reservation inquiry from the user device (5);
D2) transmitting, by the server (3), a reservation signal to the processing unit (41) of the selected one of the battery stations (4); and
D3) in response to receipt of the reservation signal, switching, by the processing unit (41) of the selected one of the battery stations (4), a designated one of the recharge ports (42) in the idle state to the reserved state.

11. The method of Claim 10, each of the battery stations (4) further including a plurality of lock units (43) corresponding with the recharge ports (42), respectively, the method
further **characterized by**, after step D3) :
D4) determining, by the processing unit (41) of the selected one of the battery stations (4), whether a battery (2) is connected to the designated one of the recharge ports (42);
D5) when it is determined that a battery (2) is connected to the designated one of the recharge ports (42), controlling, by the processing unit (41), the lock unit (43) corresponding with the designated one of the recharge ports (42) to secure the battery (2), and controlling, by the processing unit (41), the designated one of the recharge ports (42) to start charging the battery (2); and
D6) when it is determined that a battery (2) is not connected to the designated one of the recharge ports (42) after a predetermined time period has elapsed, controlling, by the processing unit (41), the one of the recharge ports (42) switched to the reserved state to switch to the idle state.

12. The method of Claim 11, the server (3) storing a plurality of battery identification numbers corresponding respectively with the batteries (2), and a plurality of user identification numbers each associated with one or more of the battery identification numbers, the method further **characterized by**, after step D5) :
periodically obtaining, by the processing unit (41) of the selected one of the battery stations (4), a battery status set of the battery (2) that is being charged;
transmitting, by the processing unit (41) of the selected one of the battery stations (4), the battery status set to the server (3); and
transmitting, by the server (3), the battery status set to a target according to one of the user identification numbers that is associated with the battery identification number of the battery (2) that is being charged.

13. The method of Claim 12, each of the batteries (2) storing therein a retrieval code, the server (3) storing a plurality of retrieval codes corresponding respectively with the batteries (2), the method further **characterized by**, after step D6):
when it is determined that the battery (2) connected to the designated one of the recharge ports (42) is fully charged, transmitting, by the server (3), a notification to the target;
in response to receipt of a user-input retrieval code intended for the battery (2) connected to the designated one of the recharge ports (42), comparing, by the processing unit (41) of the selected one of the battery stations (4), whether the retrieval code stored in the battery (2) connected to the designated one of the recharge ports (42) is identical to the user-input retrieval code, and transmitting the user-input retrieval code to the server (3); and
when it is determined that one of the retrieval codes stored in the server (3) associated with the battery (2) connected to the designated one of the recharge ports (42) is identical to the user-input retrieval code, controlling, by the server (3), the lock unit (43) corresponding with the designated one of the recharge ports (42) to release the battery (2) so as to remove the battery (2).

14. A power management system **characterized by**:
a server (3); and
a plurality of battery stations (4) communicating with said server (3), each of said battery stations (4) having a plurality of recharge ports (42), each of said recharge ports (42) being operable to switch between a idle state and a reserved state,
wherein said server (3) is configured to receive an inquiry that includes a geographic location of a user device (5);
said server (3) is configured to, in response to receipt of the inquiry, determine a selected one of said battery stations (4) that has at least one recharge ports (42) in the idle state, and that has a shortest distance from the user device (5), and transmit a response to the user device (5), the response including the selected one of said battery stations (4); and
said server (3) is further configured to control one of the at least one recharge ports (42) at the selected one of said battery stations (4) that is in the idle state to switch to the reserved state.

15. The power management system of Claim 14, **characterized in that**:
said server (3) stores a plurality of station codes that correspond respectively with said battery stations (4), each of the station codes including geographical location information of the corresponding one of said battery stations (4);
said server (3) is configured to
retrieve current information of said battery stations (4), the current information including, for each of said battery stations (4), at least a number of recharge port(s) (42) that is/are in the idle state;
determine the selected one of said battery stations (4) based on the current information and the station codes; and
transmit the second response including the selected one of said battery stations (4) to the user device (5).

16. The power management system of Claim 14 or 15, **characterized in that**:
each of said battery stations (4) includes a processing unit (41) that is connected to each of said recharge ports (42) at said battery station (4) for switching said recharge port (42) between the idle state and the reserved state;
said server (3) is configured to
receive a reservation inquiry from the user device (5), and
transmit a reservation signal to said processing unit (41) of the selected one of said battery stations (4); and
said processing unit (41) of the selected one of battery stations (4), is configured to switch a designated one of said recharge ports (42) in the idle state to the reserved state in response to receipt of the reservation signal.

17. The power management system of Claim 16, **characterized in that**:
each of said battery stations (4) further includes a plurality of lock units (43) corresponding with said recharge ports (42), respectively;
said processing unit (41) of the selected one of said battery stations (4) is configured to determine whether a battery (2) is connected to the designated one of said recharge ports (42);
said processing unit (41) is configured to, when it is determined that a battery (2) is connected to the designated one of said recharge ports (42), control said lock unit (43) corresponding with the designated one of said recharge ports (42) to secure the battery (2), and control the designated one of said recharge ports (42) to start charging the battery (2); and
said processing unit (41) is configured to, when it is determined that a battery (2) is not connected to the designated one of said recharge ports (42) after a predetermined time period has elapsed, control the designated one of said recharge ports (42) to switch to the idle state.

18. The power management system of Claim 17, **characterized in that**:
said server (3) stores a plurality of battery identifier numbers corresponding respectively with the batteries (2), and a plurality of user identification numbers each associated with one or more of the battery identifier numbers,
said processing unit (41) of the selected one of said battery stations (4) is configured to periodically obtain a battery status set of the battery (2) that is being charged, and to transmit the battery status set to said server (3);
said server (3) is configured to transmit the battery status set to a target according to one of the user identification number that is associated with the battery identifier number of the battery (2) that is being charged.

19. The power management system of Claim 18, **characterized in that**:
each of the batteries (2) stores therein a retrieval code, said server (3) stores a plurality of retrieval codes corresponding respectively with the batteries (2) ;
said server (3) is configured to transmit a notification to the target when it is determined that the battery (2) connected to the designated one of said recharge ports (42) is fully charged;
said processing unit (41) of the selected one of said battery stations (4) is configured to, in response to receipt of a user-input retrieval code intended for the battery (2) connected to the designated one of said recharge ports (42), determine whether retrieval code stored in the battery (2) connected to the designated one of said recharge ports (42) is identical to the user-input retrieval code, and transmit the user-input retrieval code to said server (3); and
said server (3) is configured to, when it is determined that one of the retrieval codes stored in said server (3) associated to the battery (2) that is connected to the designated one of said recharge ports (42) is identical to the user-input retrieval code, control said lock unit (43) corresponding with the designated one of said recharge ports (42) to release the battery (2) so as to enable removal of the battery (2) .

20. The power management system of Claim 14, **characterized in that**:
said server (3) is configured to transmit a retrieval code corresponding with the batteries (2) connected to the designated one of said recharge ports (42);
said server (3) is configured to, when it is determined that the battery (2) connected to the designated one of said recharge ports (42) is fully charged, transmit a notification to the target;
one of said server (3) and said processing unit (41) of the selected one of said battery stations (4) is configured to, in response to receipt of a user-input retrieval code intended for the battery (2) connected to the designated one of said recharge ports (42), determine whether the user-input retrieval code is correct; and
said one of said server and said processing unit (41) of the selected one of said battery stations (4) is configured to, when it is determined that the user-input retrieval code is correct, control said lock unit (43) corresponding with the designated one of said recharge ports (42) to release the battery (2) so as to enable removal of the battery (2).

21. The power management system of Claim 14, **characterized in that**:
said processing unit (41) of a visited one of said battery stations (4) is configured to obtain a user identification number and to transmit, the user identification number to said server (3), wherein the user identification number is included in a barcode displayed on a user device (5);
said processing unit (41) of the visited one of said battery stations (4) is further configured to transmit the user identification number and an identification codes corresponding with the visited one of said battery stations (4) to said server (3); and
said server (3) is configured to verify the user identification number, and when the user identification number is successively verified, to control at least one recharge port (42) located at the visited one of said battery stations (4) to switch to the reserved state .
